Europäisches Patentamt

European Patent Office

Office européen des brevets

(19)

(11) Numéro de publication: **0 157 707**
**B1**

(12) **FASCICULE DE BREVET EUROPEEN**

(45) Date de publication du fascicule du brevet: **08.08.90**

(21) Numéro de dépôt: **85400650.9**

(22) Date de dépôt: **02.04.85**

(51) Int. Cl.⁵: **H 02 K 21/24,** G 01 C 19/08,
H 02 K 15/04, H 02 K 7/20

(54) **Procédé pour fabriquer un bobinage d'un moteur synchrone à aimants permanents pour l'entraînement d'un gyroscope.**

(30) Priorité: **02.04.84 FR 8405155**

(43) Date de publication de la demande:
**09.10.85 Bulletin 85/41**

(45) Mention de la délivrance du brevet:
**08.08.90 Bulletin 90/32**

(84) Etats contractants désignés:
**DE FR GB IT**

(56) Documents cités:
**DE-A-2 802 753**
**FR-A-1 477 322**
**FR-A-1 516 085**
**FR-A-2 266 354**
**GB-A- 939 063**
**US-A-2 011 114**
**US-A-3 149 256**

**ELEKTROTECHNIK UND MASCHINENBAU, vol.
100, no. 2, février 1983, pages 35-42, Vienne, AT;
W.R. CANDERS et al.: "Auslegung von
Scheibenrotoren für hochtourige
Synchronmaschinen mit Permanenterregung"**

(73) Titulaire: **SOCIETE DE FABRICATION
D'INSTRUMENTS DE MESURE (S.F.I.M.)
13, avenue Marcel Ramolfo-Garnier
F-91301 Massy (FR)**

(72) Inventeur: **Descourt, Gilles
26, rue Appert
F-91300 Massy (FR)**
Inventeur: **Noel, Claude
85, Avenue du Général de Gaulle
F-94500 Champigny S/Marne (FR)**

(74) Mandataire: **Schrimpf, Robert et al
Cabinet Regimbeau 26, Avenue Kléber
F-75116 Paris (FR)**

## Description

La présente invention concerne un procédé pour fabriquer un moteur synchrone à aimants permanents pour l'entraînement d'un gyroscope.

Un but de l'invention est de fournir un procédé pour fabriquer un tel moteur dans des conditions économiques.

On conaît depuis longtemps l'intérêt de l'utilisation d'un moteur électrique sans balais pour l'entraînement d'un gyroscope et l'on a jéjà cherché à produire un moteur synchrone plat à aimants permanents pour cette application (brevet FR 1 516 085). On a cherché d'autre part à réaliser un moteur plat en empliant des cartes de circuits imprimés constituant un stator entre des aimants montés en saillie sur des organes de support (brevet FR 1 477 322). On connaît aussi un procédé pour fabriquer un bobinage de moteur (brevet US—A—2 011 114) tel que défini dans le préambule de la revendication 1.

La présente invention vise à perfectionner encore le procédé de fabrication du bobinage de façon à réduire encore davantage le coût de production.

On y parvient, selon l'invention en mettant en oeuvre la caractéristique de la revendication 1.

On décrira ci-après un tel procèdè, en référence au dessin joint, la description et les figures faisant apparaître d'autres caractéristiques de l'invention concernant le procédé de fabrication.

Sur les figures:

la figure 1 est une couple axiale d'une example de gyroscope équipé d'un moteur conforme à la présente invention;

la figure 2 est une vue de principe, éclatée, d'un moteur diphasé conforme à la présente invention;

la figure 3 est un schéma de la circulation du flux dans le moteur;

la figure 4 est une demi-coupe transversale du moteur;

la figure 5 est une vue en perspective éclatée d'une exemple de réalisation du moteur;

les figures 6 et 7 sont relatives à un outillage pour la fabrication des bobinages du moteur;

la figure 8 est une vue du bobinage obtenue au moyen de l'outillage des figures 6 et 7, et

la figure 9 est un graphique montrant l'influence du décalage d'un pôle magnétique dans le moteur.

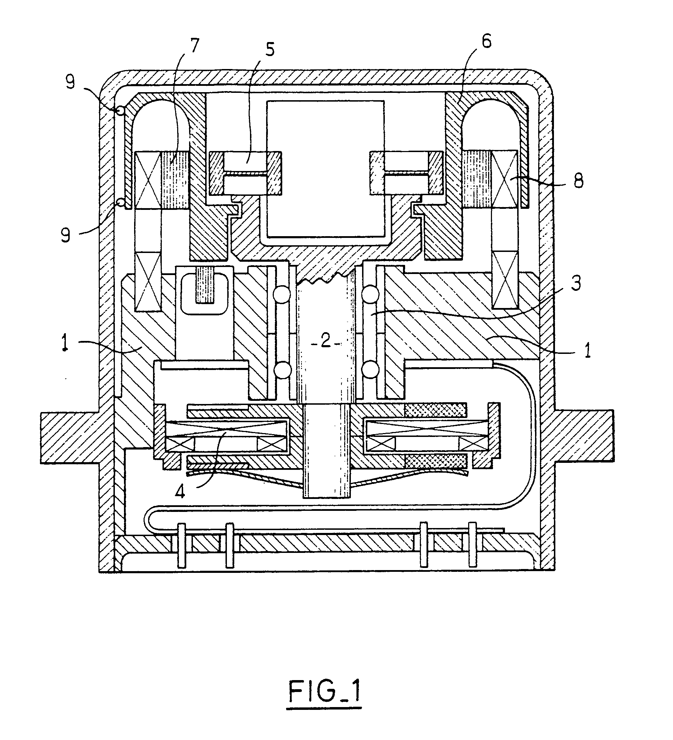

Le gyroscope représenté sur la figure 1 comprend un support 1 constitutant un boîtier définissant un passage central pour un arbre 2 maintenu dans le passage par des roulements précontraints 3. L'arbre est entraîné en rotation à une extrémité par un moteur 4 et, à son autre extrémité, il est articulé par un montage à la cardan 5 avec un volant 6 qui se présente dans cet exemple sous la forme d'une cloche à l'intérieur de laquelle a été aménagé une logement en forme de tore à section rectangulaire dans lequel est située une couronne d'aimants 7 fixés au volant en face des bobines de commande 8. Cet ensemble est normalement recouvert par un capot, comme représenté.

Le volant 6 du gyroscope est équilibré par des billes 9 et la ligne d'arbre du gyroscope est équilibrée par un disque. Ces équilibrages font l'objet de demandes de brevets déposées par la Demanderesse.

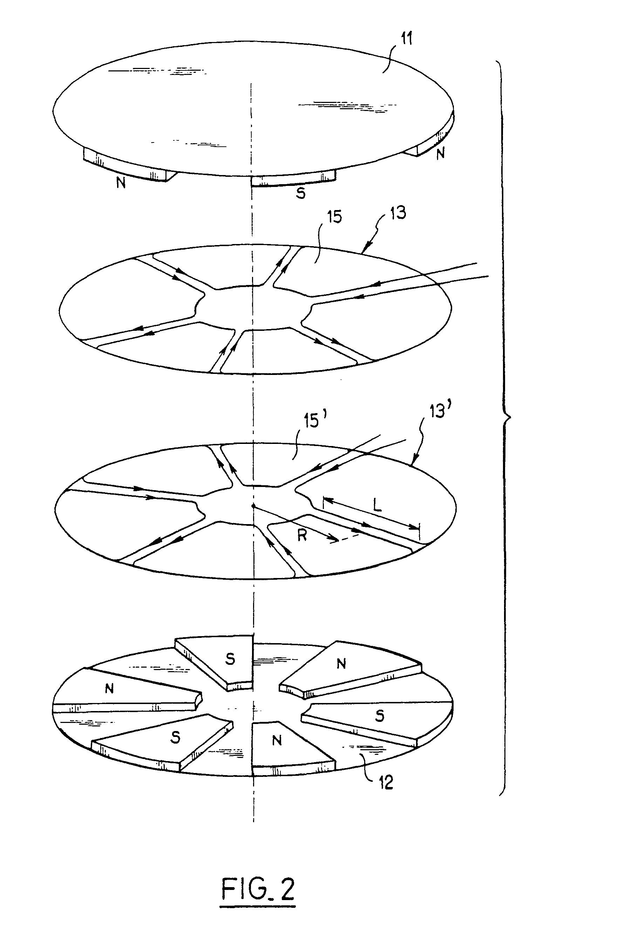

La présente invention concerne le moteur 4 dont une vue détaillée apparaît súr la figure 2.

Il s'agit d'un moteur plat dont le principe de fonctionnement est celui de tout moteur synchrone. Le champ rotorique est entraîné sans glissement par un champ tournant. Le couple fourni est fonction du déphasage spatial entre ces deux champs. Le rotor est constitué de deux disques 11, 12 comportant des aimants permanents N, S. Dans la réalisation préférée, les aimants des rotors sont créés dans une galette frittée en samarium cobalt qui est collée sur une galette de support en matériau magnétique, par exemple en fer nickel.

La technique pour créer des pôles Nord et des pôles Sud dans la galette en samarium cobalt est une technique connue.

Les aimants ont, de préférence, une épaisseur de l'ordre de 0,4 à 1 mm, de préférence 0,5 mm.

Les deux demi-rotors 11, 12 sont disposés de part et d'autre de deux demi-stators 13, 13' (fig. 2 à 5) qui sont constitués par une bague amagnétique 14, de préférence en bronze cadmié ou autre matériau facilitant la dissipation thermique, cette bague contenant les deux bobinages de phase disposés l'un au-dessus de l'ature de façon à coopérer respectivement l'un avec les aimants du demi-rotor 11 et l'autre avec les aimants du demi-rotor 12.

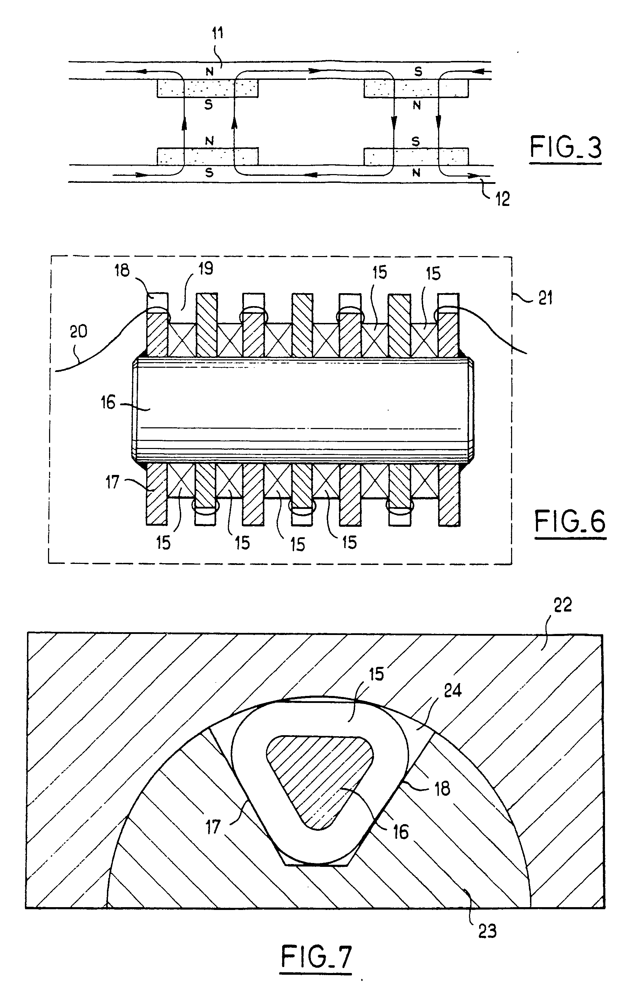

La figure 3 représente le flux dans le moteur.

La figure 6 est un vue éclatée d'un exemple de réalisation du moteur dans lequel chaque demi-rotor comporte six aimants et chaque demi-stator comporte une bobine comprenant six enroulements 15, montés en série suivant une disposition en forme de couronne. On n'a pas représenté sur la figure la bague dans laquelle sont placés les deux bobinages.

Pour fabriquer les deux enroulements d'un demi-stator, l'invention propose un procédé particulier qui permet de fabriquer ensemble les six enroulements d'un même bobinage.

Pour ce faire, selon l'invention:

On place, en parallèle, sur un broche 16 de section triangulaire (figure 6), des flasques 17 présentant chacun une encoche 18, les flasques étant disposés en sorte que les intervalles 19 entre les flasques correspondant aux épaisseurs des enroulements du bobinage à réaliser et en sorte que les encouches soient alternativement opposées par rapport à la broche. on enroule un fil 30 pour bobinage sur la broche dans le premier intervalle 19 jusqu'à obtenir l'un des enroulements 15, on fait passer le fil dans l'encoche du flasque qui sépare cet intervalle du suivant puis, en conservant le même sens d'enroulement, on enroule le fil dans cet intervalle suivant jusqu'à constituer un autre enroulement 15 et ainsi de suite jusqu'à obtenir les six enroulements 15 du bobinage.

On choisit, de préférence, les dimensions des encoches de façon que le fil soit relativement maintenu dans l'encoche et ne puisse pas se dérouler.

Pour solidariser les spires de chaque enroulement, il est préconisé de choisir un fil à enrobage thermoplastique et de cuire et enrobage en disposant l'ensemble représenté sur la figure 6 dans un four de cuisson. Ce four a été schématisé en 21 sur la figure 6.

Avant cette opération, il est avantageux de mettre au gabarait les enroulements du bobinage en disposant chaque enroulement dans une matrice de mise en forme comprenant (figure 7) un élément femelle 22 présentant une cavité ayant la forme extérieure d'un demi-bobinage et un élément mâle 23 de forme complémentaire et présentant une encoche 24 apte à loger un enroulement 15 et présentant deux plats 17, 18 destinés à former les deux côtés opposés de l'enroulement, côtés qui seront en contact avec les deux enroulements voisins de cet enroulement dans le bobinage. La matrice 22, 23 a une épaisseur correspondant à l'épaisseur d'un enroulement 15 en sorte qu'elle peut être inséree chaque fois dans l'intervalle entre deux flasques 17.

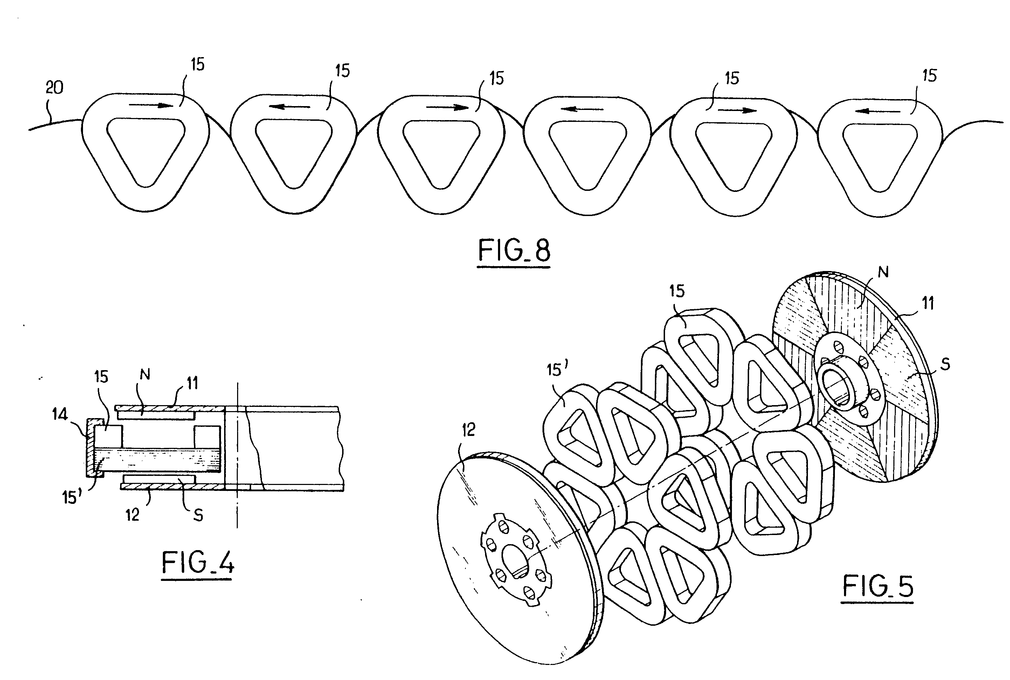

Après mise en forme et cuisson des enroulements, on retire la broche 16 et les flasques 17 et l'on obtient la suite d'enroulements 15 représentés sur la figure 8. Sur cette figure, les flèches indiquent les sens d'enroulement de chaque enroulement et l'on voit que ces sens sont deux à deux opposés bien que, lors de la fabrication, on ait toujours enroulé le fil 20 dans le même sens.

Il ne reste plus qu'à disposer ensuite les enroulements dans la bague 25.

De façon avantageuse, il est prévu de munir le premier flasque 17 d'une rainure circulaire pour pouvoir former avec le fil une boucle qui permettra de sortir un signal vitesse, l'une des bobines fonctionnant en bobine tachymétrique.

Le signal obtenu aux bornes d'une de ces bobines est un signal sinusoïdal de fréquence égale à 3 fois la vitesse de rotation du gyroscope.

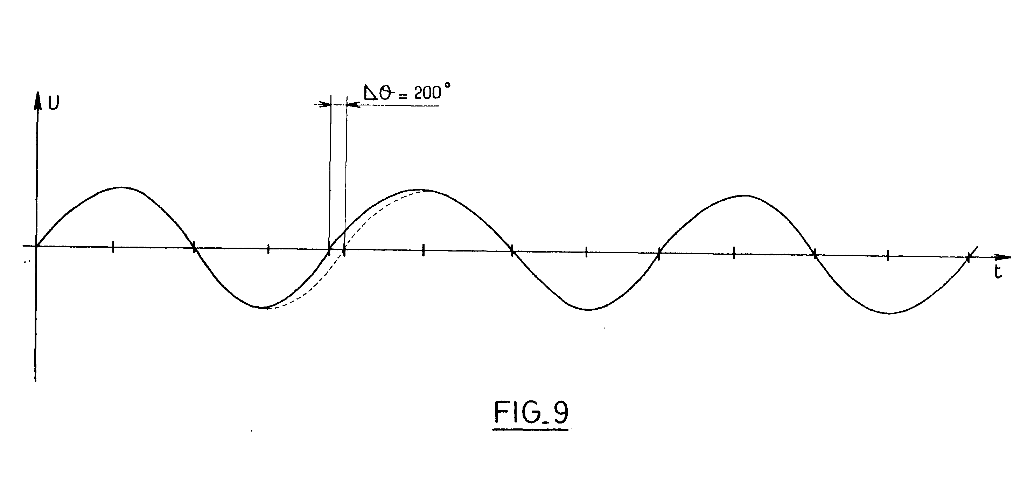

Dans certaines applications, il est intéressant de connaître en plus la position du volant par rapport au support du gyroscope. On préconise, à cette fin, de décaler angulairement l'un des aimants, ce qui permettra de provoquer une déformation du signal sinusoïdal, déformation qui apparaîtra à la fréquence de rotation du gyroscope. Cette déformation est représentée sur la figure 9; elle apparaît comme un décalage de la sinusoïde, une fois sur trois (différence entre trait plein et trait pointillé).

Le démarrage du moteur peut être effectué par une rampe de fréquence démarrant à quelques hertz ou en commande impulsionnelle ou comme un moteur asynchrone. Le nombre des pôles et des enroulements peut être différent de six mais on considère que cette valeur représente un optimum, un nombre inférieur risquant de créer des vibrations et un nombre inférieur étant difficile à réaliser et étant susceptible de donner naissance à des fuites magnétiques.

Un moteur conforme à l'invention peut avoir un encombrement aixal de quelques millimètres seulement et, par exemple, inférieur à 5 mm pour des aimants d'épaisseur de l'ordre de 0,5 mm.

## Revendications

1. Procéde pour fabriquer un bobinage d'un moteur synchrone à aimants permanents pour l'entraînement d'un gyroscope, dans lequel:

on place, en parallèle, sur un broche (16) des flasques (17) présentant chacun une encoche (18), les flasques étant disposés de façon à constituer entre eux des intervalles (19) correspondant aux épaisseurs des enroulements du bobinage à realiser;

on enroule un fil (20) pour bobinage sur la broche dans le premier intevalle (19) jusqu'à obtenir l'lun des enroulements (15) du bobinage, on fait passer le fil dans l'encoche du flasque qui sépare cet intervalle du suivant puis, en conservant le même sens d'enroulement, on enroule le fil (20) dans cet intervalle suivant jusqu'à constituer un autre enroulement (15) et ainsi de suite jusqu'à obtenir les enroulements (15) du bobinage;

on retire la broche et les flasques obtenant ainsi la série d'enroulement qui constitue le bobinage, caractérisé en ce qu'on dispose les flasques en sorte qu les encoches soient alternativement opposées par rapport à la broche et en ce que pour solidariser les spires de chaque enroulement, on choisit un fil à enrobage thermoplastique et on cuit cet enrobage alors qu'il est encore en place sur la broche (16) entre deux flasques (17).

2. Procédé selon la revendication 1, caractérisé en ce qu'on met au gabarit chaque enroulement (15) du bobinage dans une matrice de mise en forme alors que l'enroulement est encore sur la broche (16) entre deux flasques (17).

3. Outillage pour la mise en oeuvre d'un procédé selon la revendication 1 ou 2, cet outillage comprenant un mandrin (16) et une série de flasques (17) présentant des encoches (18), caractérisé en ce qu'il comprend une matrice de mise en forme (22, 23), et, éventuellement, un four de cuisson (21).

4. Outillage selon la revendication 3, caractérisé en ce que l'un des flasques (17) présente une rainure circulaire pour pouvoir former, avec le fil (20), une bouchle qui permettra de sortir un signal vitesse.

5. Outillage selon la revendication 3 ou 4, caractérisé en ce que la matrice de mise en forme comprend un élément femelle (22) présentant une cavité ayant la forme extérieure d'un demi-bobinage et un élément mâle (23) de forme complémentaire, cet élément mâle présentant une encoche (24) apte à loger un enroulement (15) et présentant deux plats (17, 18) destinés à former les deux côtés opposés de l'enroulement destiné à venir en contact avec les deux enroulements voisins du bobinage.

**Patentansprüche**

1. Verfahren zur Herstellung einer Spule für einen Synchronmotor mit Dauermagneten zum Antrieb eines Gyroskops, bei dem

auf einem Doren (16) Lagerschilde (17) parallel positioniert werden, die jeweils eine Aussparung (18) aufweisen, wobei die Lagerschilde derart angeordnet sind, daß sie zueinander Zwischenräume (19) ausbilden, die mit der Dicke von herzustellenden Spulenwicklungen übereinstimmen;

ein Draht (20) für die Spule in dem ersten Zwischenraum (19) auf den Dorn gewickelt wird, bis eine Wicklung (15) der Spule enstanden ist, der Draht durch die Aussparung des Lagerschilds geleitet wird, der diesen Zwischenraum vom angrenzenden trennt, der Draht (20) unter Beibehaltung des gleichen Wicklungssinnes in diesem Zwischenraum solange gewickelt wird, bis eine weitere Wicklung (15) hergestellt ist und so fort, bis die Wicklungen (15) der Spule enstanden sind;

der Dorn und die Lagerschilde herausgezogen werden, so daß man die Reihe von Wicklungen, die die Spule bilden, erhält, dadurch gekennzeichnet, daß die Lagerschilde derart angeordnet werden, daß die Aussparungen — auf den Dorn bezogen — abwechselnd einander gegenüberliegen und daß zum Fixieren der Windungen jeder Wicklung ein Draht mit einer thermoplastischen Ummantelung gewählt wird und diese Ummantelung gebacken wird, solange sie noch auf dem Dorn (16) zwischen zwei Lagerschilden (17) positioniert ist.

2. Verfahren nach Anspruch 1, dadurch gekennzeichnet, daß jede Wicklung (15) der Spule in einer Formatiermatrize schabloniert wird, während sich die Wicklung noch auf dem Dorn (16) zwischen zwei Lagerschilden (17) befindet.

3. Vorrichtung zur Durchführung eines Verfahren nach Anspruch 1 oder 2, wobei diese Vorrichtung einen Wickeldorn (16) und eine Reihe von Lagerschilden (17) die Aussparungen (18) aufweisen, besitzt, dadurch gekennzeichnet, daß sie eine Formatiermatrize (22, 23) und, eventuell, einen Backofen (21) aufweist.

4. Vorrichtung nach Anspruch 3, dadurch gekennzeichnet, daß einer der Lagerschilde (17) eine Ringnut aufweist, um mit dem Draht (20) eine Schleife bilden zu können, die es gestattet, eine Geschwindigkeitssignal auszugeben.

5. Vorrichtung nach Anspruch 3 oder 4, dadurch gekennzeichnet, daß die Formatiermatrize ein weibliches Teil (22), das eine der äußeren Form einer Halbspule entsprechende Ausbuchtung aufweist, sowie ein männliches Gegenstück (23) mit einer komplementären Form besitzt, wobei das männliche Gegenstück (23) eine für die Aufnhame einer Wicklung (15) geeignete Aussparung (24) und zwei Flächen (17, 18) aufweist, welche die zwei der Wicklung (15) gegenüberliegenden Seiten bilden, die dazu vorgesehen ist, mit den beiden angrenzenden Wicklungen der Spule in Kontakt zu kommen.

**Claims**

1. Process for manufacturing a winding of a synchronous motor having permanent magnets for driving a gyroscope, in which:

plates (17) each having a notch (18) are placed in parallel on a spindle (16), the plates being disposed such that there result between them spacings (19) corresponding to the thicknesses of the coils of the winding to be produced;

a winding wire (20) is wound onto the spindle in the first spacing (19) until one of the coils (15) of the winding is obtained, the wire is passed into the notch of the plate separating this spacing from the next and then, maintaining the same direction of winding, the wire (20) is wound in this next spacing until another coil (15) results and so on until the coils (15) of the winding are obtained;

the spindle and the plates are removed, thus obtaining the series of coils which results in the winding,

characterized in that the plates are disposed such that the notches are alternately opposed with respect to the spindle, and in that, to secure the turns of each coil, there is chosen a wire with thermoplastic coating, and this coating is cured while it is still in place on the spindle (16) between two plates (17).

2. Process according to Claim 1, characterized in that each coil (15) of the winding is formed in a shaping die while the coil is still on the spindle (16) between two plates (17).

3. Equipment for implementing a process according to Claim 1 or 2, this equipment comprising a mandrel (16) and a series of plates (17) having notches (18), characterized in that it comprises a shaping die (22, 23) and where appropriate a curing furnace (21).

4. Equipment according to Claim 3, characterized in that one of the plates (17) has a circular groove capable of forming with the wire (20) a loop which will allow a speed signal to emerge.

5. Equipment according to Claim 3 or 4, characterized in that the shaping die comnprises a female element (22) having a cavity which has the external shape of a half winding and a male element (23) of complementary shape, this male element having a notch (24) suitable for accomodating a coil (15) and having two flat faces (17, 18) intended for shaping the two opposing sides of the coil intended to come into contact with the two neighbouring coils of the winding.

FIG_1

11

15 13

15' 13'

L

R

S N

N S

S N

12

FIG. 2

FIG. 3

FIG. 6

FIG. 7

FIG_8

FIG_4

FIG_5

FIG_9

EP 0 157 707 B1